# EUROPEAN PATENT APPLICATION

(11) **EP 4 360 932 A1**
(43) Date of publication of application: **01.05.2024**
(21) Application number: 23205864.4
(22) Date of filing: 25.10.2023
(51) Int. Cl.: B60L 1/00, B60K 6/28, B60K 6/48, B60L 3/00, B60L 3/04, B60L 50/15, B60L 50/51, B60L 50/60, H02J 7/00, B60K 6/485, B60L 50/16, B60L 58/12, B60L 58/20

(54) **IN-VEHICLE CONTROLLER**

(30) Priority: 25.10.2022 JP 2022170782
(71) Applicant: TOYOTA JIDOSHA KABUSHIKI KAISHA, Toyota-shi, Aichi-ken, 471-8571 (JP)
(72) Inventor: MIURA, Takahisa, Toyota-shi, 471-8571 (JP)
(74) Representative: D Young & Co LLP

(57) **Abstract**

The in-vehicle controller of the present disclosure is installed in a vehicle together an engine, a motor capable of generating electricity connected to a crankshaft of the engine, a high voltage battery connected to the motor by a high voltage power line, a low voltage battery, a DC/DC converter connected to the high voltage power line and a low voltage power line connected to the low voltage battery, and a relay attached to the high voltage battery side of the high voltage power line from the DC/DC converter. The in-vehicle controller of the present disclosure stops driving the DC/DC converter after driving off the motor when completing the batteryless driving by disconnecting the high voltage battery with the relay turned off.

## Description

### Technical Field

The present disclosure relates to an in-vehicle controller, in particular, to an in-vehicle controller installed in a vehicle comprising a motor capable of generating electricity connected to a crankshaft of an engine, a high voltage battery connected to the motor, a low voltage battery, and a DC/DC converter connected to the high voltage power line and a low voltage power line.

### Background

Conventionally, an in-vehicle controller of this type has been proposed that is mounted in an automobile together with a planetary gear with three rotating elements connected to three shafts (engine, first motor, and drive shaft), a second motor connected to the drive shaft, and a high voltage battery that exchanges power with the first motor and the second motor (See, for example, Patent Literature 1). This in-vehicle controller disconnects the high voltage battery by turning off the system main relay in the event of a high voltage battery failure, and executes a batteryless driving mode in which all the power generated by the first motor is consumed by the second motor. When completing batteryless driving, the in-vehicle controller determines whether the back-emf voltage of the second motor is greater than the DC voltage and performs PWM control of the inverter such that the DC voltage is within the voltage range that allows the PWM control to be sustained while the back-emf voltage of the second motor is determined to be greater than the DC voltage PWM control of the inverter to keep the DC voltage within the voltage range that allows PWM control to continue. When the in-vehicle controller determines that the back-emf voltage of the second motor is less than the DC voltage, it controls the inverter such that the DC voltage decreases, and stops the inverter when the DC voltage reaches the specified stop voltage.

### Citation List

### Patent Literature

PTL1: Japanese Patent Application Laid Open No. 2010-200582

### Summary

An in-vehicle controller has been proposed to be installed in a car along with the engine and the automatic transmission as well as a motor that can generate electricity connected to the crankshaft of the engine and the high voltage battery that exchanges the electric power of the motor. The vehicle is often further equipped with the low voltage battery that supplies power to auxiliary equipment and the DC/DC converter that is connected to the high voltage power line connected to the high voltage battery and the low voltage power line connected to the low voltage battery. These vehicles have different hardware configurations from the vehicles described in the background art, so they cannot be controlled in the same way when terminating batteryless driving, and if batteryless driving is not terminated properly, a load dump may occur.

The main purpose of the in-vehicle controller of the present disclosure is to more properly finish batteryless driving in the vehicle equipped with the motor that can generate electricity connected to the crankshaft of the engine and the high voltage battery that exchanges the electric power of the motor.

The in-vehicle controllers of the present disclosure have adopted the following means to achieve the main objectives described above.

The in-vehicle controller of the present disclosure to be installed in a vehicle including an engine, a motor capable of generating electricity connected to the crankshaft of the engine, a high voltage battery connected to the motor by a high voltage power line, a low voltage battery, a DC/DC converter connected to the high voltage power line and the low voltage power line connected to the low voltage battery, and a relay attached to the high voltage battery side of the high voltage power line from the DC/DC converter. The in-vehicle controller of the present disclosure stops driving the DC/DC converter after driving off the motor when completing the batteryless driving by disconnecting the high voltage battery with the relay turned off.

The in-vehicle controller of the present disclosure to be installed in a vehicle together an engine, a motor capable of generating electricity connected to the crankshaft of the engine, a high voltage battery connected to the motor by a high voltage power line, a low voltage battery, a DC/DC converter connected to the high voltage power line and the low voltage power line connected to the low voltage battery, and a relay attached to the high voltage battery side of the high voltage power line from the DC/DC converter. The in-vehicle controller of the present disclosure stops driving the DC/DC converter after driving off the motor when completing the batteryless driving by disconnecting the high voltage battery with the relay turned off. This prevents load dumps from occurring and allows batteryless driving to be properly finished.

In the in-vehicle controllers of the present disclosure, the vehicle is equipped with a capacitor attached to the DC/DC converter side of the high voltage power line from the relay, the in-vehicle controller may stop driving the motor, discharge the electric charge of the capacitor, and then stop driving the DC/DC converter when the batteryless driving is finished. If the capacitor is installed in the high voltage power line, the DC/DC converter can be stopped after discharging the charge of the capacitor, such that the capacitor can be discharged more properly and the batteryless driving can be finished.

### Brief Description of Drawings

Fig. 1 is a schematic configuration of a vehicle 20 equipped with the in-vehicle controller as one embodiment of this disclosure, and
Fig. 2 is a flowchart of an example of the driving finish process executed by a main ECU 70 in the embodiment.

### Description of Embodiments

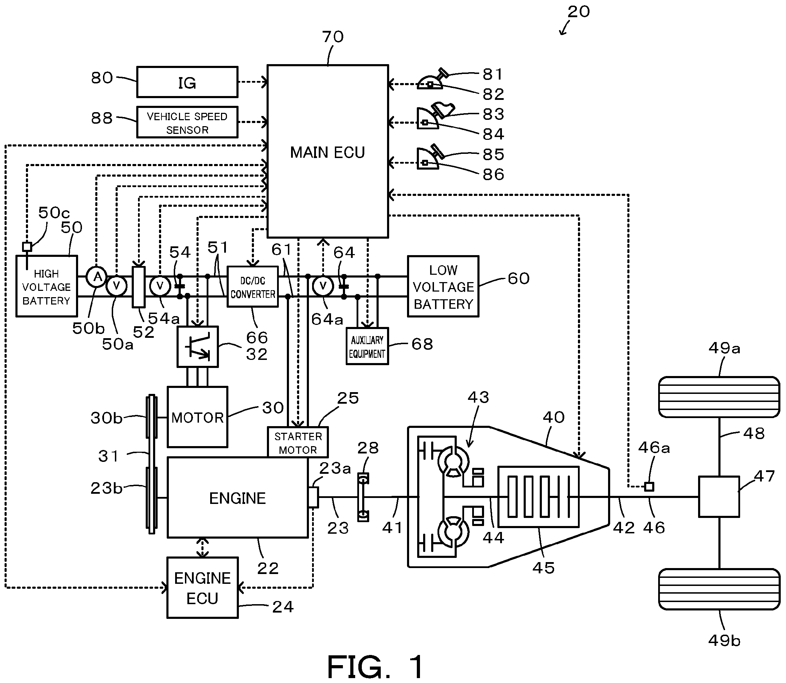

The embodiment of this disclosure is described next. Figure 1 shows a schematic configuration of the vehicle 20 equipped with the in-vehicle controller as one embodiment of this disclosure. As shown in the figure, the vehicle 20 of the embodiment has an engine 22, a starter motor 25, a motor 30, an inverter 32, an automatic transmission 40, a high voltage battery 50, a low voltage battery 60, a DC/DC converter 66, and the main electronic control unit (hereinafter referred to as "the main ECU") 70. In the embodiment, the main electronic control unit 70 corresponds to the in-vehicle controller.

The engine 22 is configured as a multi-cylinder (four-cylinder, six-cylinder, etc.) internal combustion engine that uses gasoline or diesel oil supplied from a fuel tank via a fuel supply system as fuel. The engine 22 is operated and controlled by an engine electronic control unit (hereinafter referred to as "the engine ECU") 24.

The engine ECU 24, not shown in the figure, is configured as a microcomputer with a CPU at its core. In addition to the CPU, the engine ECU 24 has a ROM that stores processing programs, a RAM that temporarily stores data, input ports, output ports, and communication ports. The engine ECU 24 inputs signals from various sensors necessary to operate and control the engine 22, such as the crank angle θcr from a crank position sensor 23a, which detects the rotational position of a crankshaft 23 of the engine 22, via input ports. The engine ECU 24 outputs various control signals for operating and controlling the engine 22 via output ports. The engine ECU 24 calculates the rotation speed Ne of the engine 22 based on the crank angle θcr of the engine 22 from the crank position sensor 23a.

The starter motor 25 is connected to the crankshaft 23 as the output shaft of the engine 22. The starter motor 25 cranks the engine 22 by receiving power from the Low voltage battery 60. The crankshaft 23 of the engine 22 is connected to the input side of a damper 28 as a torsional element. The crankshaft 23 of the engine 22 has a pulley 23b attached to it.

The motor 30 is configured, for example, as the synchronous generator motor. A pulley 30b is attached to the rotary shaft of the motor 30. The pulley 30b is driven rotationally by the power transmitted by a belt 31 that is hung on the pulley 23b attached to the crankshaft 23 of the engine 22. The motor 30 is driven by the inverter 32. The inverter 32 is connected to a high voltage power line 51. The motor 30 is driven to rotate by the switching control of a plurality of switching elements of the inverter 32 by the main ECU 70.

The automatic transmission 40 is equipped with a torque converter 43, an automatic transmission 45 with, for example, six speeds, and a hydraulic circuit not shown in the figure. The torque converter 43 is configured as a common fluid type conduction device. The torque converter 43 transmits the power of an input shaft 41 connected to the rotating shaft of the motor 30 to an intermediate rotating shaft 44, which is the input shaft of the automatic transmission 45, either by amplifying the torque or by transmitting the power as it is without amplifying the torque. The automatic transmission 45 is connected to the intermediate rotating shaft 44 and an output shaft 42, which is connected to a drive shaft 46. The automatic transmission 45 has a plurality of planetary gears and a plurality of hydraulically driven frictional engagement elements (clutches, brakes). The drive shaft 46 is connected to drive wheels 49a and 49b via an axle 48 and a rear differential gear 47. The automatic transmission 45, for example, forms forward stages from first to sixth gear and backward stages by engaging and disengaging a plurality of frictional engagement elements, and transmits power between the intermediate rotating shaft 44 and the output shaft 42.

The high voltage battery 50 is configured, for example, as a lithium ion battery or a nickel metal hydride battery. The high voltage battery 50 is connected to the high voltage power line 51, which is connected to the inverter 32. In the high voltage power line 51, a relay 52 is attached to disconnect the high voltage battery 50. The low voltage battery 60 is configured as, for example, a lead-acid battery with a lower rated voltage than the high voltage battery 50. The low voltage battery 60 is connected to a low voltage power line 61, which is connected to the starter motor 25 and an auxiliary equipment 68. The DC/DC converter 66 is connected to the high voltage power line 51 and the low voltage power line 61. The DC/DC converter 66 is controlled by the main ECU 70 to step down the power of the high voltage power line 51 and supply it to the low voltage power line 61, or step up the power of the low voltage power line 61 and supply it to the high voltage power line 51. A smoothing capacitor 54 is attached to the high voltage power line 51. A smoothing capacitor 64 is attached to the low voltage power line 61.

The main ECU 70, not shown in the figure, is configured as a microcomputer with a CPU at its core. In addition to the CPU, it has a ROM that stores processing programs, a RAM that temporarily stores data, input ports, output ports, and communication ports.

The main ECU 70 inputs the rotational position ϕm of the rotor of the motor 30 from the rotational position sensor (not shown) that detects the rotational position of the rotor of the motor 30 and the rotational speed Np of the drive shaft 46 from a rotational speed sensor 46a mounted on the drive shaft 46 via the input port. The main ECU 70 also inputs the battery voltage Vb from the voltage sensor 50a attached to the output terminal of the high voltage battery 50, the charge and discharge current Ib from a current sensor 50b, and the battery temperature Tb from the temperature sensor 60c attached to the high voltage battery 50, the high voltage system voltage VH from a voltage sensor 54a attached to the high voltage power line 51 and the low voltage system voltage VL from a voltage sensor 64a attached to the low voltage power line 61 via the input port. The main ECU 70 also inputs the ignition signal from an ignition switch 80 and the shift position SP from a shift position sensor 82 that detects the operating position of a shift lever 81, the acceleration angle Acc from an accelerator pedal position sensor 84, which detects the amount of depressing an accelerator pedal 83, the brake pedal position BP from a brake pedal position sensor 86, which detects the amount of depressing a brake pedal 85, and the vehicle speed V from a vehicle speed sensor 88 via the input port.

The main ECU 70 outputs the control signals to the starter motor 25, the control signals to the inverter 32, the driving control signals to the relay 52, the control signals to the automatic transmission 40, the control signals to the DC/DC converter 66, and the driving control signals to the auxiliary equipment 68 through the output ports.

The main ECU 70 is connected to the engine ECU 24 via a communication port. The main ECU 70 calculates the storage ratio SOC of the high voltage battery 50 based on the voltage VH of the high voltage battery 50 and the current Ib flowing in the high voltage battery 50.

The main ECU 70 sets the drive shaft demand torque Td* required for the drive shaft 46 and the motor demand torque Tm* to be output from the motor 30 based on the acceleration angle Acc and the vehicle speed V while the vehicle 20 is running. The main ECU 70 calculates the execution torque Teg* as the sum of the torque obtained by converting the drive shaft demand torque Td* to the crankshaft 23 and the motor demand torque Tm* to the crankshaft 23, and sends the execution torque Teg* to the engine ECU 24. The engine ECU 24 executes the intake air volume control, the fuel injection control, and the ignition control such that the received execution torque Teg* is output from the engine 22. The main ECU 70 switches and controls the switching elements of the inverter 32 such that the motor demand torque Tm* is output from the motor 30. The main ECU 70 controls the automatic transmission 40 such that the gearshifts are determined by the gearshift map in which the gearshifts are classified according to the vehicle speed V and the driving apparatus demand torque Td*.

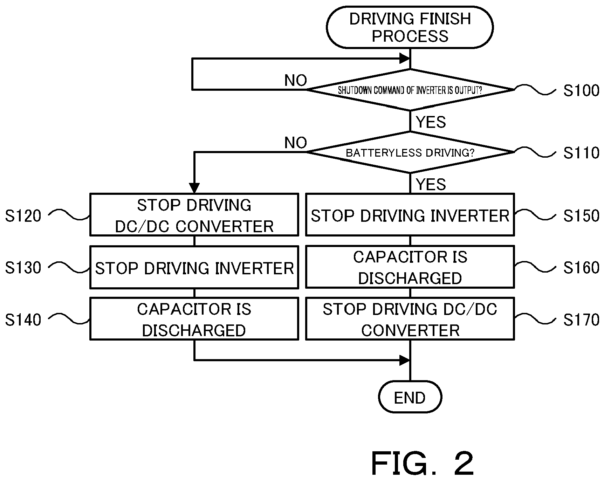

Next, the operation of the vehicle 20 of the embodiment will be described, especially when the batteryless driving with the high voltage battery 50 disconnected is finished. Figure 2 shows a flowchart of an example of the driving finish process executed by the main ECU 70 in the embodiment.

When the driving finish process is executed, the main ECU 70 first executes a process to wait until the shutdown command of the inverter 32 is output (step S100) . When the main ECU 70 determines that the inverter 32 shutdown command is output, it determines whether or not the run is the batteryless driving (step S110). In the batteryless driving, the vehicle drives with the high voltage battery 50 disconnected by turning off the relay 52 based on a malfunction in the high voltage battery 50. In this case, the main ECU 70 performs the batteryless control. The batteryless control controls the inverter 32 such that the motor 30 functions as a generator, and also controls the DC/DC converter 66 such that the power in the high voltage power line 51 (the power generated by the motor 30) is stepped down and supplied to the low voltage power line 61.

When the main ECU 70 determines in step S110 that the driving is not batteryless, it stops driving the DC/DC converter 66 (step S120), then stops driving the inverter 32 to stop driving the motor 30 (step S130), and furthermore thereafter, the capacitor 34 is discharged (step S140), and this process is completed. Discharging the capacitor 34 can be performed by switching the inverter 32 to energize the motor 30 and consume it as heat.

When the main ECU 70 determines in step S110 that the driving is batteryless, it first stops the drive of the inverter 32 to stop the drive of the motor 30 (step S150), then discharges the capacitor 34 (step S160), and after that, it stops the drive of the DC/DC converter 66 (step S170), and this process is completed. The reason for stopping the drive of the inverter 32 to stop the drive of the motor 30 when the DC/DC converter 66 is being driven is to deter load dumps from occurring.

In the main ECU 70 (the in-vehicle controller) installed in the vehicle 20 of the embodiment described above, when finishing the batteryless driving in which the vehicle is driven with the high voltage battery 50 disconnected with the relay 52 turned off, the driving of the inverter 32 is stopped with the DC/DC converter 66 being driven to stop driving the motor 30, and then stop driving the DC/DC converter 66. This can deter load dumps from occurring.

In the vehicle 20 of the embodiment, the engine 22 and the motor 30 are connected by two pulleys 23b, 30b and the belt 31 wound around both pulleys 23b, 30b. However, the engine 22 and motor 30 may be connected by a chain mechanism, through a gear mechanism, or directly connected.

The following is an explanation of the correspondence between the main elements of the embodiment and the main elements of the invention described in the section on means to solve the problem. In the embodiment, the engine 22 corresponds to "the engine", the motor 30 corresponds to "the motor", the high voltage battery 50 corresponds to "the high voltage battery", the low voltage battery 60 corresponds to "the low voltage battery", and the DC/DC converter 66 corresponds to "the DC/DC converter", the relay 52 corresponds to "the relay" and the main electronic control unit (main ECU) 70 corresponds to "the in-vehicle controller".

The correspondence between the major elements of the embodiment and the major elements of the invention described in the means to solve a problem section is an example of how the embodiment can be used to specifically explain the embodiment of the invention described in the means to solve a problem section. This does not limit the elements of the invention described in the means to solve the problem section. In other words, interpretation of the invention described in the means to solve a problem section should be based on the description in that section, and the embodiment is only one specific example of the invention described in the means to solve a problem section.

The above is a description of the form for implementing this disclosure using the embodiment. However, the present disclosure is not limited in any way to these embodiments, and can of course be implemented in various forms within the scope that does not depart from the gist of the present disclosure.

### Industrial Applicability

This disclosure is applicable to the manufacturing industry for in-vehicle controllers and other applications.

## Claims

1. An in-vehicle controller(70) to be installed in a vehicle(20);
the vehicle comprising an engine(22), a motor(30) capable of generating electricity connected to a crankshaft (32) of the engine, a high voltage battery(50) connected to the motor(30) by a high voltage power line(51), a low voltage battery(60), a DC/DC converter(66) connected to the high voltage power line(51) and a low voltage power line(61) connected to the low voltage battery(60), and a relay(52) attached to the high voltage battery(50) side of the high voltage power line(51) from the DC/DC converter(66):
the in-vehicle controller(70) is programmed to stop driving the DC/DC converter (66) after driving off the motor (30) when completing the batteryless driving by disconnecting the high voltage battery(50) with the relay(52) turned off.

2. The in-vehicle controller(70) according to claim 1,
the vehicle(20) is equipped with a capacitor(54) attached to the DC/DC converter(66) side of the high voltage power line(51) from the relay(52),
the in-vehicle controller (70) is programmed to stop driving the motor(30), discharges the electric charge of the capacitor (54), and then stops driving the DC/DC converter (66) when the batteryless driving is finished.
